# FASCICULE DE BREVET EUROPEEN

(11) **EP 2 520 245 B1**
(45) Date de publication et mention de la délivrance du brevet: **19.03.2014**
(21) Numéro de dépôt: 12003044.0
(22) Date de dépôt: 02.05.2012
(51) Int. Cl.: A61C 1/08

(54) **Méthode de détermination de la position et de la direction d'un tube guide dans un gabarit chirurgical et dispositif pour sa mise en oeuvre**
Verfahren für die Bestimmung der Position und der Ausrichtung einer chirurgischen Schablone, und Anordnung für dessen Durchführung
Method of determining the position and the direction of a guide tube in a surgical drill guide, and device for carrying it out

(30) Priorité: 03.05.2011 FR 1101370
(43) Date de publication de la demande: 07.11.2012
(73) Titulaire: Cohen, Isaac, 93340 Le Raincy (FR)
(72) Inventeur: Cohen, Isaac, 93340 Le Raincy (FR)

(56) Documents cités:
- EP-A2- 2 044 903
- WO-A1-2009/135513
- DE-A1- 19 709 215
- US-A1- 2001 053 510

## Description

### DOMAINE TECHNIQUE

L'invention se rapporte au domaine technique des méthodes et des dispositifs d'aide à la mise en place d'implants dentaires. La présente invention propose une méthode pour déterminer avec précision la position et la direction d'un tube guide dans un gabarit chirurgical en fonction de coupes scannographiques.

### ETAT DE LA TECHNIQUE

La technique de l'implant dentaire consiste à ancrer dans l'os d'un maxillaire un ou plusieurs implants en vue de servir de support à une réhabilitation prothétique.

Un des problèmes qui se manifeste au cours de la pose d'un implant dentaire est de trouver une partie de la mâchoire présentant une structure osseuse suffisamment volumineuse et épaisse pour que l'implant puisse être fixé de manière sûre et durable dans le temps en évitant certaines structures anatomiques, telles que le nerf dentaire inférieur, les sinus, la fosse nasale, etc. On cherche donc une méthode permettant de déterminer avec précision l'orientation du forage.

Le document EP 2 044 903 traite aussi un procédé de fabrication d'un gabarit chirurgical.

### RESUME DE L'INVENTION

L'invention est le procédé selon les revendications 1 et 2.

Ici décrit est une méthode pour la mise en place d'un tube guide dans un gabarit chirurgical dans la même direction que celle planifiée sur les coupes scannographiques, c'est-à-dire dans la même direction que celle déterminée à partir de l'analyse des coupes scannographiques.

A cet effet, on propose une méthode associant :
a) la réalisation de coupes scannographiques du maxillaire d'un patient muni d'un gabarit radiologique avec
b) un dispositif (1) permettant
   i) de placer des tiges radioopaques (27, 28) dans un gabarit radiologique (21) de manière référencée et
   ii) de placer un tube guide dans le gabarit chirurgical selon la direction implantaire désirée (24) en fonction des données résultant de l'analyse des coupes scannographiques des maxillaires munis du gabarit radiologique.

La méthode comprend :
a) la mise en place dans un gabarit radiologique (21) de tiges radioopaques (27,28) de manière référencée ;
b) la réalisation de coupes scannographiques du maxillaire (20) d'un patient muni du gabarit ainsi réalisé ;
c) la détermination de la direction implantaire (24) au niveau de points d'introduction implantaire choisis ;
d) la reproduction à l'aide du dispositif (1) de cette direction et le forage du gabarit radiologique dans cette direction à l'aplomb des points d'introduction implantaire pour créer un conduit;
e) la mise en place d'au moins un tube guide dans le conduit ainsi réalisé dans le gabarit radiologique (21) et ainsi constituer un gabarit chirurgical.

Le dispositif (1) pour la détermination de la position et de la direction d'un tube guide dans un gabarit chirurgical comprend :
a) un moyen de fixation (2) d'un solide (3), tel qu'un modèle en plâtre d'un maxillaire, sur un plateau tournant (4) permettant la rotation du solide et la mesure de l'angle de rotation, la position du solide sur le plateau tournant étant identifiable;
b) un appareil de forage (5) apte à se déplacer selon une direction verticale pour forer le solide fixé sur le plateau tournant;
c) un moyen pour fixer la direction de forage comprenant deux articulations (6,7) dont les axes de rotation sont perpendiculaires entre eux et perpendiculaires à la direction de déplacement de l'appareil de forage ;
d) un moyen (8,8') pour amener l'appareil de forage à l'aplomb d'un point de forage du solide ou un moyen (9,9') pour amener un point de forage du solide à l'aplomb de l'appareil de forage, le déplacement de l'appareil de forage ou du solide pouvant être mesuré par rapport à un point de référence ;
e) un moyen de mesure du déplacement de l'appareil de forage (13) et/ou du déplacement du solide (11).

Selon un mode de réalisation, les deux articulations constituent une rotule à doigts dont la rotation est bloquée autour d'un axe orienté selon la direction verticale.

Selon un mode de réalisation, la rotule à doigts (6,7) supporte le plateau tournant (4).

Selon un mode de réalisation, la rotule à doigts (6,7) est solidaire de l'appareil de forage (5).

Selon un mode de réalisation, la première articulation (7) supporte le plateau tournant (4) et la seconde articulation (6) est solidaire de l'appareil de forage (5), les axes de rotation des deux articulations étant perpendiculaires entre eux et perpendiculaires à la direction verticale.

Selon un mode de réalisation, le moyen pour amener l'appareil de forage à l'aplomb du point de forage du solide comprend :
- une colonne verticale (10) comportant une crémaillère (13) grâce à laquelle l'appareil de forage peut se déplacer le long de ladite colonne ;
- un premier plateau mobile (9) pouvant se déplacer par rapport à un plateau fixe (12) selon une direction et ;
- un second plateau mobile (9') solidaire du premier plateau mobile et pouvant se déplacer par rapport au premier plateau mobile selon une direction perpendiculaire à la direction de déplacement du premier plateau mobile,
- le premier et le second plateau mobile permettant de déplacer le solide pour amener un point de celui-ci au contact de l'appareil de forage, le déplacement de chacun des deux plateaux mobiles pouvant être mesuré à l'aide d'un système de mesure (11).

Selon un mode de réalisation, le moyen pour amener l'appareil de forage à l'aplomb du point de forage du solide comprend :
- une colonne verticale (10) comportant une crémaillère (13) grâce à laquelle l'appareil de forage peut se déplacer le long de ladite colonne ;
- un dispositif (8') supportant l'appareil de forage et permettant son déplacement selon deux directions perpendiculaires l'une à l'autre.

Selon un mode de réalisation, l'appareil de forage est un moteur présentant un axe longitudinal dans l'axe duquel est monté un foret.

Selon un mode de réalisation, le dispositif comprend :
a) un plateau fixe (12) solidaire d'une colonne verticale (10) définissant une direction verticale et servant de support à l'appareil de forage (5);
b) un premier plateau mobile (9) pouvant se déplacer par rapport au plateau fixe dans une direction et un second plateau mobile (9') solidaire du premier plateau mobile, pouvant se déplacer par rapport au premier plateau mobile selon une direction perpendiculaire à la direction de déplacement du premier plateau mobile;
c) un moyen de mesure du déplacement (11) de chacun des deux plateaux mobiles par rapport à une position choisie;
d) le second plateau mobile supportant deux articulations (6,7) dont les axes de rotation sont perpendiculaires entre eux et perpendiculaires à la direction de déplacement de l'appareil de forage ; les deux articulations constituant une rotule à doigt dont la rotation est bloquée autour d'un axe orienté selon la direction verticale ;
e) un plateau tournant reposant (4) sur un disque gradué (14), le plateau tournant et le disque gradué formant un ensemble reposant sur les deux articulations ; ce plateau tournant étant apte à effectuer un mouvement de rotation autour de l'axe perpendiculaire au disque gradué et passant par son centre ;
f) un moyen de fixation (2) d'un solide (3), tel qu'un modèle en plâtre d'un maxillaire, sur le plateau tournant (4) permettant la rotation du solide et la mesure de cet angle de rotation, la position du solide sur le plateau tournant étant identifiable.

Selon un mode de réalisation, l'inclinaison de la rotule à doigts ainsi que les déplacements permettant d'amener un point de forage du solide au contact de l'appareil de forage est/sont commandé(s) par ordinateur.

Selon un mode de réalisation, le dispositif (1) pour la détermination de la position et de la direction d'un tube guide dans un gabarit chirurgical, comprend :
a) un moyen de fixation (2) d'un solide (3), tel qu'un modèle en plâtre d'un maxillaire, sur un plateau tournant (4) permettant la rotation du solide, la position du solide sur le plateau tournant étant identifiable; le plateau tournant reposant sur un disque gradué (14) permettant la mesure de l'angle de rotation du solide ;
b) un plateau fixe (12) solidaire d'une colonne verticale (10) définissant une direction verticale et servant de support à un appareil de forage (5) apte à se déplacer selon une direction verticale pour forer le solide fixé sur le plateau tournant;
c) un premier plateau mobile (9) pouvant se déplacer par rapport au plateau fixe dans une direction et un second plateau mobile (9') solidaire du premier plateau mobile, pouvant se déplacer par rapport au premier plateau mobile selon une direction perpendiculaire à la direction de déplacement du premier plateau mobile;
d) un moyen de mesure du déplacement (11) de chacun des deux plateaux mobiles par rapport à une position choisie;
ledit dispositif comprenant une première articulation supportant le plateau tournant et pouvant s'incliner d'un angle de -90° à +90° autour d'un axe défini par la direction de déplacement d'un des deux plateaux mobiles et une seconde articulation solidaire de l'appareil de forage et pouvant s'incliner d'un angle de -90° à +90° autour d'un axe défini par la direction de déplacement du second plateau mobile.

Ce dernier mode de réalisation peut comprendre une ou plusieurs des caractéristiques suivantes :
i) Le plateau tournant est apte à effectuer un mouvement de rotation autour de l'axe perpendiculaire au disque gradué et passant par le centre du disque gradué.
ii) La colonne verticale (10) comporte :
   - une crémaillère (13) grâce à laquelle l'appareil de forage peut se déplacer le long de ladite colonne ;
   - un dispositif (8') supportant l'appareil de forage permet son déplacement selon deux directions perpendiculaires l'une à l'autre.
iii) L'appareil de forage est un moteur présentant un axe longitudinal dans l'axe duquel est monté un foret.
iv) L'inclinaison de chaque articulation ainsi que les déplacements du premier et du second plateau mobile permettant d'amener un point de forage du solide au contact de l'appareil de forage est/sont commandé(s) par ordinateur.

L'invention a pour objet une méthode de détermination de la position et de la direction d'un tube guide dans un gabarit chirurgical. Dans le premier mode de mise en oeuvre de la méthode, celle-ci comprend les étapes suivantes :
a) sur le dispositif (1) décrit ci-dessus, repérage d'une position angulaire de référence αᵣ du plateau tournant (4) sur le disque gradué (14) ;
b) fixation d'un modèle en plâtre d'un maxillaire (3) muni d'un gabarit radiologique (21) dans une position reproductible et référencée du plateau tournant ;
c) marquage de deux points sur le modèle en plâtre, ces deux points se trouvant sur une droite parallèle à la direction de déplacement d'un des deux plateaux mobiles (9,9'); l'un des deux points constituant l'origine d'un repère orthonormé ;
d) choix d'un degré d'inclinaison de référence βᵣ et γᵣ des deux articulations (6,7) constituant la rotule à doigt ;
e) forage du gabarit radiologique à l'aplomb des deux points de l'étape c) et introduction des tiges radioopaques dans les conduits ainsi forés (22, 23);
f) radiographie en trois dimensions des maxillaires munis du gabarit radiologique, et obtention, à l'aide d'un logiciel, des coupes axiales, sagittales et transversales d'un des maxillaires quelle que soit son orientation tridimensionnelle;
g) orientation du maxillaire de telle sorte que :
   g1) une coupe scannographique axiale passant par les deux tiges radioopaques fasse apparaître deux points formant une droite parallèle à la direction de déplacement d'un des deux plateaux mobiles ;
   g2) une coupe scannographique transversale passant par l'une deux tiges radioopaques la fasse apparaître dans sa totalité ;
   g3) une coupe sagittale passant par l'une des tiges radioopaques la fasse apparaître dans sa totalité ;
h) marquage de n points d'introduction implantaire sur le modèle en plâtre I₁, I₂, ..., Iₙ ou marquage de n points d'introduction implantaire sur les coupes scannographiques I'₁, I'₂, ..., I'ₙ;
i) détermination des coordonnées des n points d'introduction implantaire dans un repère orthonormé xOy associé soit au dispositif, soit à la coupe scannographique axiale, l'origine du repère étant l'un des points à l'aplomb duquel une tige radioopaque a été forée dans le gabarit radiologique ;
j) détermination pour chacun des n points d'introduction implantaire de l'angle de rotation de la coupe axiale αᵢ, i allant de 1 à n, de manière à ce que l'axe du maxillaire au niveau de chacun des points d'introduction implantaire soit perpendiculaire à l'axe de la coupe transversale passant par ces points ;
k) détermination d'axes implantaires idéaux sur les coupes sagittales et transversales, un axe implantaire idéal étant schématisé par un segment dont l'origine est la gencive superficielle qui est en continuité avec l'image radiographique de l'intrados du gabarit radiologique ;
l) pour chaque point d'introduction implantaire, mesure de l'angle βᵢ entre l'axe implantaire idéal (24) et l'axe de référence (27) représenté par un segment dans la même direction que la tige radioopaque sur la coupe sagittale, mesure de l'angle γᵢ entre l'axe implantaire idéal (24) et l'axe de référence (28) représenté un segment dans la même direction que la tige radioopaque sur la coupe transversale ; i allant de 1 à n ;
m) sur le dispositif, pour chaque point d'introduction implantaire, rotation du plateau tournant d'un angle αᵢ déterminé à l'étape j), inclinaison d'une des articulations autour de l'axe Ox de l'angle βᵢ et inclinaison de la deuxième articulation autour de l'axe Oy de l'angle γᵢ;
n) pour chacun des points d'introduction implantaire, forage du gabarit radiologique à l'aplomb du point d'introduction implantaire à l'aide d'un foret calibré au diamètre interne du tube guide et introduction de cylindres de ce diamètre surmontées des tubes guides dans les conduits ainsi réalisés, évidage du gabarit radiologique au niveau des points de forage, positionnement des points de forage autour des tubes guides, et chargement du gabarit radiologique de résine de manière à enserrer le tube guide à l'intérieur du gabarit radiologique.

Dans le second mode de mise en oeuvre de la méthode, celle-ci comprend les étapes suivantes :
a) sur le dispositif tel que décrit ci-dessus, repérage d'une position angulaire de référence α ᵣ du plateau tournant (4) sur le disque gradué (14);
b) fixation d'un modèle en plâtre d'un maxillaire (3) muni d'un gabarit radiologique (21) dans une position reproductible et référencée du plateau tournant ;
c) marquage de deux points sur le modèle en plâtre, ces deux points se trouvant sur une droite parallèle à la direction de déplacement d'un des deux plateaux mobiles ; l'un des deux points constituant l'origine d'un repère orthonormé définissant un axe x'Ox et un axe y'Oy;
d) choix et marquage des n points d'introduction implantaire;
e) choix d'un degré d'inclinaison de référence βᵣ et γᵣ des deux articulations (6,7) constituant la rotule à doigts;
f) forage du gabarit radiologique (21) à l'aplomb des deux points de l'étape c) et à l'aplomb de tous les points d'introduction implantaire marqués à l'étape d) et introduction des tiges radioopaques dans les conduits ainsi forés (22,23);
g) radiographie en trois dimensions des maxillaires munis du gabarit radiologique, et obtention, à l'aide d'un logiciel, des coupes axiales, sagittales et transversales d'un des maxillaires quelle que soit son orientation tridimensionnelle;
h) orientation du maxillaire de telle sorte que :
   h1) une coupe scannographique axiale passant par les deux tiges radioopaques fasse apparaître deux points formant une droite parallèle à la direction de déplacement d'un des deux plateaux mobiles ;
   h2) une coupe scannographique transversale passant par l'une deux tiges radioopaques la fasse apparaître dans sa totalité ;
   h3) une coupe sagittale passant par l'une des tiges radioopaques la fasse apparaître dans sa totalité ;
i) pour chaque point d'introduction implantaire, rotation de la coupe axiale d'un angle αᵢ, i allant de 1 à n, de manière à ce que l'axe du maxillaire au niveau de chacun des points d'introduction implantaire visualisé par une tige radioopaque soit perpendiculaire à la coupe transversale passant par ce point;
j) détermination d'axes implantaires idéaux, ceux-ci étant schématisés par un segment ayant pour origine la partie gingivale de la tige radioopaque qui est à l'aplomb du point d'introduction implantaire;
k) mesure pour chaque point d'introduction implantaire de l'angle βᵢ entre l'axe implantaire idéal (24) et la tige radioopaque (27) sur la coupe sagittale et mesure de l'angle γ ᵢ; entre l'axe implantaire idéal (24) et la tige radioopaque (28) sur la coupe transversale; i allant de 1 à n ;
l) sur le dispositif, pour chaque point d'introduction implantaire, rotation du plateau tournant (4) de l'angle αᵢ, inclinaison d'une des articulations autour de l'axe x'Ox de l'angle βᵢ et inclinaison de la deuxième articulation autour de l'axe y'Oy de l'angle γᵢ de sorte que la position du modèle en plâtre corresponde à l'orientation des coupes axiales, transversales et sagittales ;
m) pour chacun des points d'introduction implantaire, forage du gabarit radiologique à l'aplomb du point d'introduction implantaire à l'aide d'un foret calibré au diamètre interne du tube guide et introduction de cylindres de ce diamètre surmontées des tubes guides dans les conduits ainsi réalisés, évidage du gabarit radiologique au niveau des points de forage, positionnement des points de forage autour des tubes guides, et chargement du gabarit radiologique de résine de manière à enserrer le tube guide à l'intérieur du gabarit radiologique.

Selon un mode de mise en oeuvre particulier de la méthode, un programme informatique permet de représenter les implants sur les coupes scannographiques en fonction de leur coordonnées déterminées au préalable sur le dispositif et de calculer les angle αᵢ, βᵢ et γᵢ.

### BREVE DESCRIPTION DES FIGURES

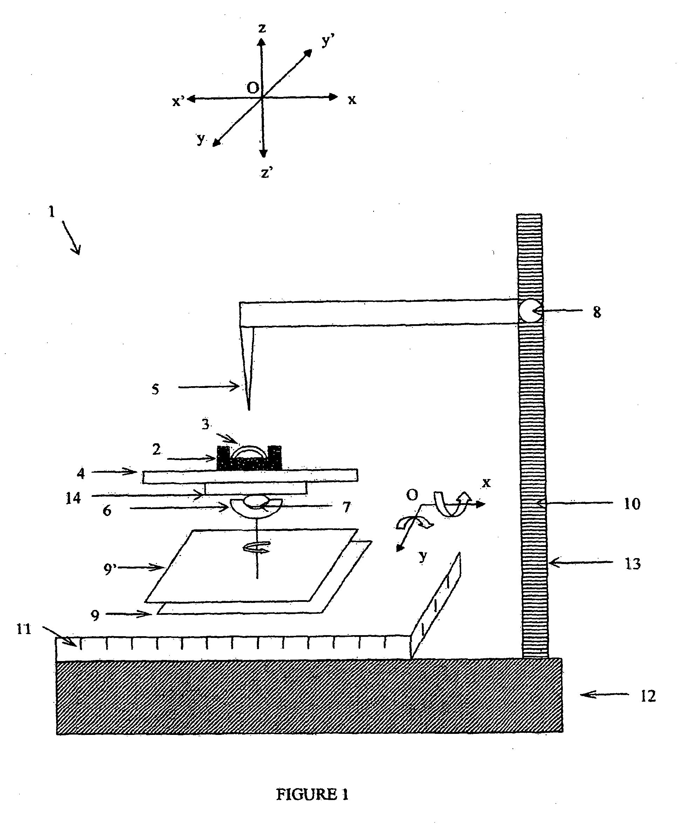

La Figure 1 est une représentation schématique illustrant un premier mode de réalisation du dispositif (1) dans lequel la direction de forage est réglée grâce à une rotule à doigts (6,7) supportant le plateau tournant (4) et deux plateaux mobiles (9, 9') permettent d'amener un point de forage du solide (3) à l'aplomb de l'appareil de forage (5). L'appareil de forage vient au contact de l'objet à forer par une translation verticale de haut en bas.

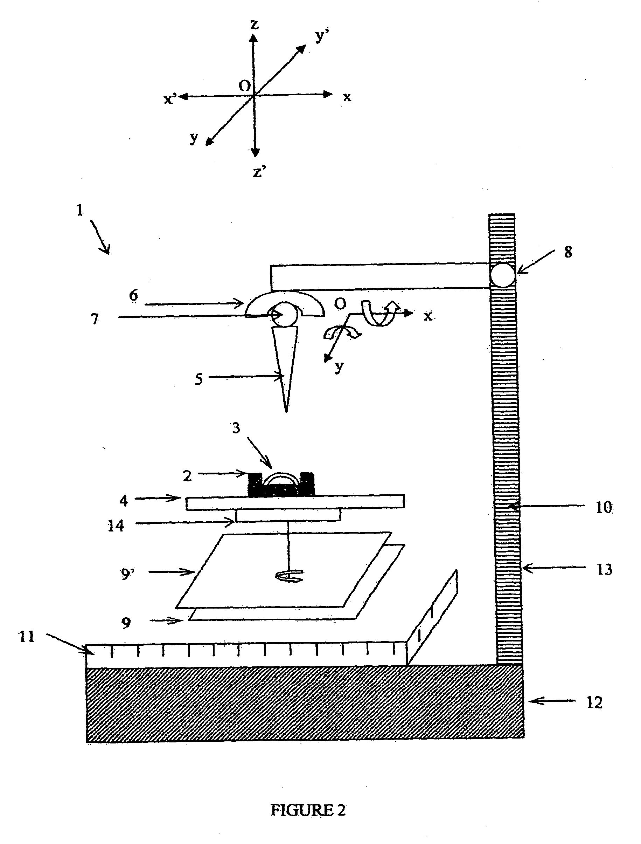

La Figure 2 est une représentation schématique illustrant un second mode de réalisation du dispositif (1) dans lequel la direction de forage est réglée grâce à une rotule à doigts (6,7) solidaire de l'appareil de forage (5) et deux plateaux mobiles (9,9') permettent d'amener un point de forage du solide (3) fixé sur le plateau tournant (4) au contact de l'appareil de forage. L'appareil de forage vient au contact de l'objet à forer par une translation verticale de haut en bas.

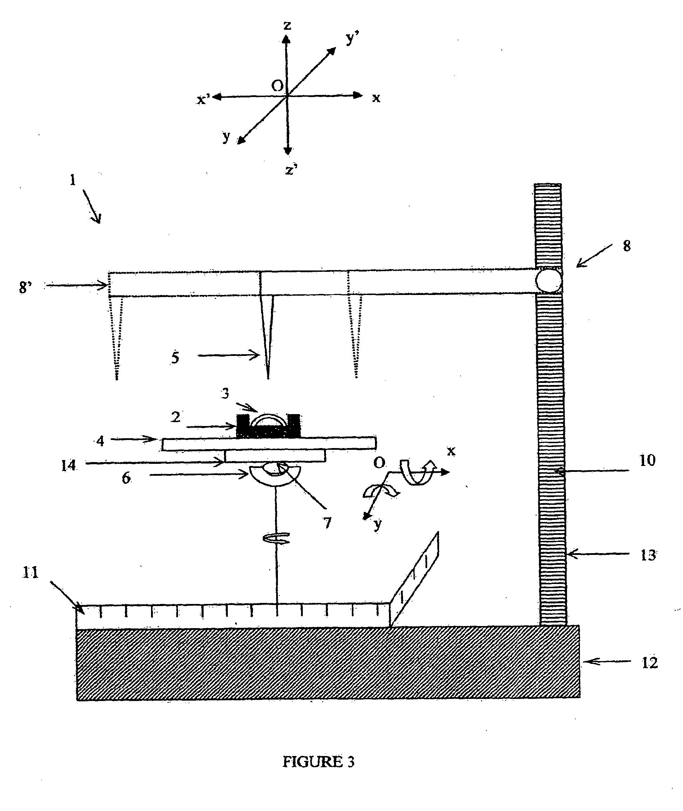

La Figure 3 est une représentation schématique illustrant un troisième mode de réalisation du dispositif (1) dans lequel la direction de forage est réglée grâce à une rotule à doigts (6,7) supportant le plateau tournant (4) et un dispositif (8') peut déplacer l'appareil de forage (5) dans un plan horizontal pour permettre d'amener celui-ci à l'aplomb d'un point de forage du solide (3). Le forage proprement dit est ensuite réalisé par une translation verticale de haut en bas de l'appareil de forage.

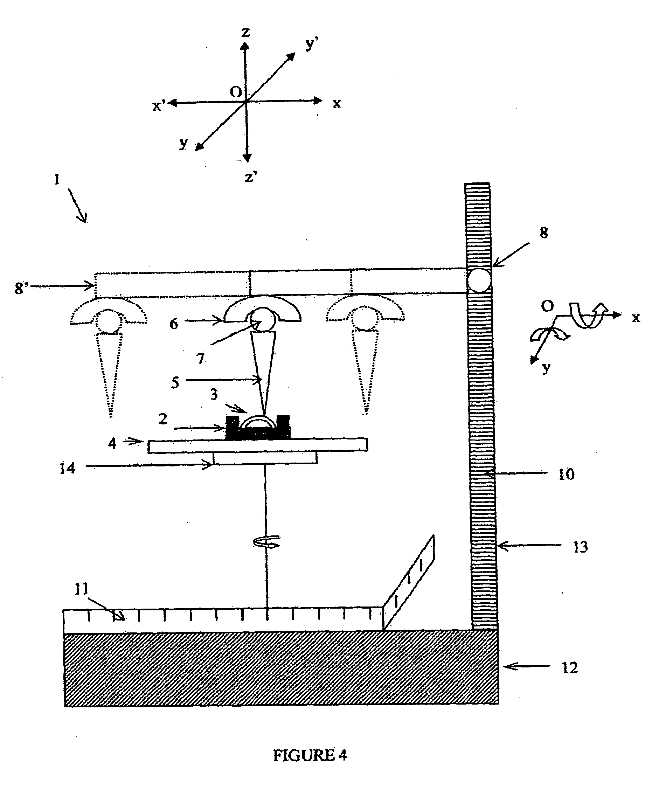

La Figure 4 est une représentation schématique illustrant un quatrième mode de réalisation du dispositif (1) dans lequel la direction de forage est réglée grâce à une rotule à doigts (6,7) solidaire de l'appareil de forage (5) et un dispositif (8') peut déplacer l'appareil de forage dans un plan horizontal pour permettre d'amener celui-ci à l'aplomb d'un point de forage du solide (3) fixé sur le plateau tournant. Le forage proprement dit est ensuite réalisé par une translation verticale de haut en bas de l'appareil de forage.

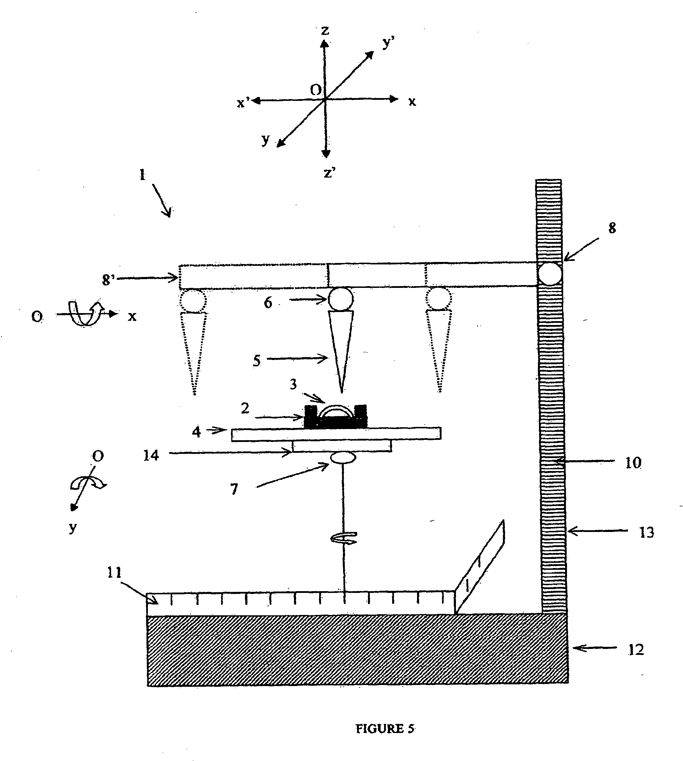

La Figure 5 est une représentation schématique illustrant un cinquième mode de réalisation du dispositif dans lequel une première articulation (6) est solidaire de l'appareil de forage (5) et une seconde articulation (7) supporte le plateau tournant (4), les axes de rotation des deux articulations étant perpendiculaires entre eux et perpendiculaires à la direction verticale z'Oz.

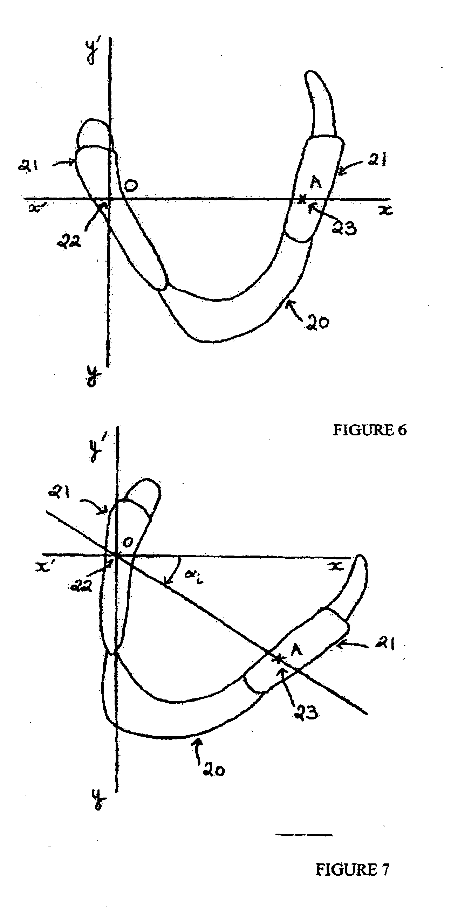

La Figure 6 est la schématisation d'une coupe scannographique frontale (ou axiale) d'un maxillaire (20) muni d'un gabarit radiologique (21) dans lequel deux conduits de forage (22, 23) ont reçu chacun une tige radioopaque.
La Figure 7 est la schématisation d'une coupe scannographique frontale d'un maxillaire (20) muni d'un gabarit radiologique (21) après rotation de la coupe d'un angle αᵢ de manière à ce que l'axe longitudinal du maxillaire au point d'introduction d'une des tiges radioopaques (22) soit perpendiculaire à la coupe scannographique transversale.

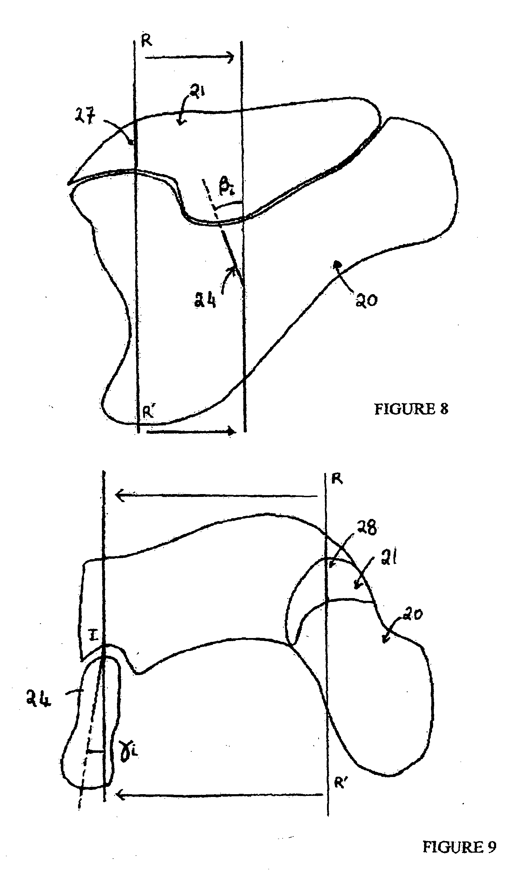

La Figure 8 est la schématisation d'une coupe scannographique sagittale d'un maxillaire (20) muni d'un gabarit radiologique (21). Elle indique la direction de référence (27) reproduisant la direction de la tige radioopaque sur l'une des coupes scannographiques. La direction de référence (27) dans le gabarit radiologique et la direction de l'axe implantaire idéal (24) forment un angle βᵢ.
La Figure 9 est la schématisation d'une coupe scannographique transversale d'un maxillaire (20) muni d'un gabarit radiologique (21). Elle indique la direction de référence (28) reproduisant la direction de la tige radioopaque sur l'une des coupes scannographiques. La direction de l'axe de référence (28) dans le gabarit radiologique et la direction de l'axe implantaire idéal (représenté sous forme d'un segment ayant comme extrémité la gencive superficielle en continuité avec l'intrados du gabarit radiologique) forment un angle γᵢ.

### EXPOSE DES MODES DE REALISATION DE L'INVENTION

### 1. Dispositif

Le dispositif (1) comprend un moyen de fixation (2) d'un solide (3) sur un plateau tournant (4). Le moyen de fixation peut par exemple être un étau immobilisant un modèle en plâtre d'un maxillaire dans une position référencée et reproductible. Le plateau tournant permet d'une part la rotation du solide d'un angle de 360° autour d'un axe vertical z'Oz perpendiculaire au plan formé par ce plateau et d'autre part la mesure de cet angle de rotation. Le plateau tournant est superposé sur un disque (14) gradué de 0 à 360°. Une marque est indiquée sur le plateau tournant. A l'aide d'un vernier, on peut déplacer cette marque ou l'immobiliser sur une position angulaire du disque gradué. La position angulaire de référence est notée αᵣ. La position du solide sur le plateau tournant ainsi que sa position angulaire sont donc identifiables.

Le dispositif comprend un appareil de forage (5) situé à l'aplomb du solide immobilisé. Il est apte à se déplacer selon une direction verticale z'Oz pour forer le solide fixé sur le plateau tournant. L'appareil de forage (5) peut être constitué d'un moteur électrique et d'un foret monté dans le prolongement de l'axe de rotation du moteur électrique. L'appareil de forage est solidaire d'une colonne verticale (10) définissant une direction verticale de référence. L'appareil de forage peut effectuer un mouvement ascendant ou descendant le long de la colonne verticale grâce par exemple à une crémaillère (8). La position de l'appareil de forage sur la colonne verticale est repérée par des graduations (13) sur la colonne verticale.

Le dispositif comprend un moyen pour fixer la direction de forage à l'aide de deux articulations (6,7) dont les axes de rotation sont perpendiculaires entre eux et sont perpendiculaires à la direction verticale. Une première articulation peut s'incliner d'un angle β de -90° à +90° autour de l'axe x'Ox tandis que la seconde articulation peut s'incliner d'un angle γ de -90° à +90° autour de l'axe y'Oy. Ainsi se constitue une rotule à doigts. La rotation de la rotule à doigts est bloquée autour de l'axe z'Oz dirigé selon la direction du déplacement de l'appareil de forage, c'est-à-dire selon la direction verticale. Dans une position de référence choisie, les angles β et γ ont respectivement pour valeurs βᵣ et γᵣ.

Le dispositif comprend un moyen pour amener l'appareil de forage (5) à l'aplomb d'un point à forer du solide (8,8') ou pour amener un point à forer du solide à l'aplomb de l'appareil de forage (9,9'), le déplacement de l'appareil de forage ou du solide pouvant être mesuré par rapport à un point de référence (10). Le moyen pour amener un point à forer du solide à l'aplomb de l'appareil de forage puis pour déplacer le foret au contact du point à forer, peut être constitué de :
- la colonne verticale comportant une crémaillère grâce à laquelle l'appareil de forage peut se déplacer le long de ladite colonne; et
- d'un premier et un second plateau mobile (9, 9').

Le premier plateau mobile (9) se déplace dans un plan horizontal par rapport à un plateau fixe (12) selon une direction donnée symbolisée par un axe x'Ox. Ce plan horizontal est perpendiculaire à la direction verticale de la colonne. Un second plateau mobile (9') repose sur le premier plateau mobile et peut se déplacer dans un plan horizontal selon une direction perpendiculaire à la direction de déplacement du premier plateau mobile. Ce plan horizontal est perpendiculaire à la direction verticale de la colonne. La direction de déplacement du second plateau mobile peut être symbolisée par un axe y'Oy perpendiculaire à l'axe x'Ox. Les deux axes x'Ox et y'Oy forment un plan horizontal. Le premier plateau est solidaire du second plateau, c'est-à-dire que le déplacement selon l'axe x'Ox du premier plateau provoque le déplacement du second plateau selon le même axe x'Ox. Le premier et le second plateau mobile permettent de déplacer l'objet immobilisé sur le plateau tournant dans un plan horizontal. Ils servent donc à déplacer l'objet de façon à amener le foret au dessus du point d'impact choisi pour le forage.

Dans le mode de réalisation représenté à la figure 1, le second plateau mobile (9') supporte la rotule à doigt, qui elle-même supporte le plateau tournant. Le mouvement de la rotule à doigts permet au plateau tournant de s'incliner par rapport à chacun des deux axes définis par la direction de déplacement des deux plateaux mobiles, c'est-à-dire les axes x'Ox et y'Oy.

Les deux articulations (6,7) constituant la rotule à doigts peuvent :
1) soit être disposées sous le plateau tournant (4), tel que représenté aux figures 1 et 3 ;
2) soit servir d'élément de liaison entre l'appareil de forage (5) et la colonne verticale (10), tel que représenté aux figures 2 et 4 ;
3) soit disposées de manière à ce que l'une (7) soit disposée sous le plateau tournant et l'autre (6) disposée entre l'appareil de forage et la colonne verticale, les deux articulations effectuant alors chacune un mouvement de rotation autour de deux axes perpendiculaires entre eux, tel que représenté figure 5.

Aux figures 1 et 2, l'association des deux plateaux mobiles (9,9'), des deux articulations (6,7) et du plateau tournant (4) permet de déplacer le solide (3) dans les trois directions de l'espace. Soit un point donné situé sur la surface du solide et soit une direction partant de ce point, d'une part l'inclinaison de la rotule à doigts permet d'aligner cette direction avec la direction de l'axe longitudinal du foret et d'autre part, les mouvements de translations du premier et du second plateau mobile dans le plan xOy permettent d'amener le foret au contact de ce point.

Dans une variante décrite aux figures 3 à 5, le moyen pour amener l'appareil de forage au contact d'un point de forage du solide est constitué de :
- la colonne verticale comportant une crémaillère grâce à laquelle l'appareil de forage peut se déplacer le long de ladite colonne ; et
- d'un dispositif (8') supportant l'appareil de forage et permettant son déplacement dans un plan horizontal selon deux directions perpendiculaires l'une à l'autre. L'appareil de forage est alors apte à se déplacer dans un plan horizontal perpendiculaire à la direction définie par la colonne verticale, dans deux directions x'Ox et y'Oy perpendiculaires l'une de l'autre, en remplacement du déplacement du premier et second plateau mobiles. Dans le cas des figures 3 et 4, les deux plateaux mobiles sont remplacés par un dispositif (8') supportant l'appareil de forage et permettant son déplacement selon deux directions perpendiculaires l'une à l'autre.

Dans le premier mode de réalisation de la méthode décrite ci-dessous, les coordonnées de chacun des n points d'introduction implantaire I₁, I₂,.. ,Iₙ, sont déterminés au moyen d'un système de mesure (11) de la valeur du déplacement de chacun des deux plateaux mobiles ou d'un système de mesure de la valeur du déplacement de l'appareil de forage. Les coordonnées de ces points sont, en abscisse, le déplacement du plateau représentant l'axe x'Ox par rapport à une origine prédéterminée, et en ordonnée, le déplacement du plateau représentant l'axe y'Oy par rapport à la même origine. Ce système de mesure du déplacement du solide (11) peut prendre la forme de deux verniers disposés dans des directions perpendiculaires. Dans le second mode de réalisation de la méthode décrite ci-dessous, la position des points d'introduction implantaire est déterminée par l'extrémité inférieure de la tige radioopaque qui se matérialise par un point sur la coupe scannographique axiale (ou transversale).

On pourrait également envisager d'orienter le dispositif de manière à ce que la colonne (10) soit disposée horizontalement et non verticalement et le déplacement du solide vers l'appareil de forage (ou inversement le déplacement de l'appareil de forage vers le solide) se produise selon une direction horizontale et non verticale.

### 2. Méthode de détermination de la position d'un tube guide dans un gabarit chirurgical

La méthode selon l'invention a pour but de préparer un gabarit radiologique puis un gabarit chirurgical (ou guide chirurgical) à l'aide du dispositif décrit au paragraphe 1. Le dispositif permet dans un premier temps la mise en place de tiges radioopaques dans le gabarit radiologique dans une direction et une position de référence, puis dans un second temps, la mise en place de tubes guides dans le gabarit radiologique dans la même position et la même direction que celles planifiées à partir des coupes scannographiques. Les éléments nécessaires à la mise en oeuvre de cette méthode sont:
- un modèle du maxillaire par exemple sous la forme d'un moulage en plâtre du maxillaire;
- un gabarit radiologique qui est généralement une gouttière thermoformée en résine épousant la surface du maxillaire ;
- des tiges constituées d'un matériau radioopaques et des forets calibrés, c'est-à-dire dont le diamètre correspond à celui des tiges radioopaques ;
- des tubes guides et des forets calibrés soit au diamètre externe du tube guide, soit au diamètre d'une partie mâle coulissant à l'intérieur du tube guide.

Deux méthodes de réalisation du gabarit chirurgical vont maintenant être décrites. Ces deux modes comprennent une étape commune de paramétrage du dispositif muni du modèle en plâtre dans une position de référence. L'étape de paramétrage comprend les sous étapes a) à g).
1) Paramétrage du dispositif muni du modèle en plâtre dans une position de référence.
   a) repérage d'une position angulaire de référence αᵣ du plateau tournant (4) sur le disque gradué (14);
   b) fixation du modèle en plâtre (3) dans une position reproductible et référencée du plateau tournant;
   c) marquage de deux points (O et A) sur le modèle en plâtre, ces deux points se trouvant sur une droite parallèle à la direction de déplacement de l'un des deux plateaux mobiles (x'Ox ou y'Oy);
   d) choix des degrés d'inclinaison de référence βᵣ et γᵣ des deux articulations (6,7) constituant la rotule à doigts;
   e) forage du gabarit radiologique (21) à l'aplomb des deux points (O et A) et introduction des tiges radioopaques (27) dans les conduits (22, 23) ainsi forés ;
   f) radiographie en trois dimensions (ou scanner) ou (Cone bean) des maxillaires munis du gabarit, et obtention, à l'aide d'un logiciel de type traitement d'images, des coupes axiales, sagittales et transversales d'un des maxillaires quelle que soit son orientation tridimensionnelle. Les figures 6, 8 et 9 sont respectivement des schématisations des coupes scannographiques axiale (frontale), sagittale et transversale d'un maxillaire muni d'un gabarit radiologique (21) dans lequel plusieurs tiges radioopaques ont été insérées.
   g) orientation du maxillaire donnant lieu à une coupe scannographique axiale, transversale et sagittale. La coupe axiale passant par les deux tiges radioopaques fait apparaître deux points formant une droite parallèle à l'axe x'Ox ou y'Oy. La coupe transversale passant par les tiges radioopaques les fait apparaître dans leur totalité. La coupe sagittale passant par les tiges radioopaques les fait également apparaître dans leur totalité. L'orientation du maxillaire se fait par la rotation de la coupe axiale autour de l'axe z'Oz, par la rotation de la coupe transversale autour de l'axe y'Oy passant par une tige radioopaque, par la rotation de la coupe sagittale autour de l'axe x'Ox passant par une tige radioopaque.

### 2-1) Premier mode de mise en oeuvre de la méthode:

h) marquage de n points d'introduction implantaire sur le modèle en plâtre symbolisés par I₁, I₂, ... , Iₙ;
i) détermination de leurs coordonnées sur le dispositif, dans le plan xOy, O étant l'un des points marqués sur le modèle en plâtre. L'abscisse est la valeur du déplacement d'un des deux plateaux mobiles se déplaçant suivant l'axe x'Ox. L'ordonnée est la valeur du déplacement du second plateau mobile se déplaçant suivant l'axe y'Oy. Ces coordonnées sont déterminées à l'aide du dispositif de mesure (11) du déplacement des deux plateaux mobiles (9,9');
j) report de ces points dans le plan orthonormé xOy sur lequel est disposée la coupe scannographique axiale.
k) détermination pour chacun des points d'introduction implantaire de l'angle de rotation de la coupe axiale αᵢ avec i allant de 1 à n, de manière à ce que l'axe du maxillaire (axe de la crête) au niveau de chacun des points d'introduction implantaire soit perpendiculaire à la coupe transversale qui peut être soit parallèle à x'Ox ou à y'Oy;
   La figure 7 montre une rotation de la coupe axiale d'un angle αᵢ de telle manière que l'axe longitudinal du maxillaire au point d'introduction O de la tige radioopaque soit perpendiculaire à la coupe transversale qui est l'axe x'Ox. La figure 7 diffère donc de la figure 6 par une rotation de l'angle αᵢ.;
l) détermination d'axes implantaires idéaux (24) passant par les points de marquage d'introduction implantaire sur les coupes sagittales et transversales à partir de la couche gingivale ;
m) pour chacun des points d'introduction implantaire, mesure de l'angle entre l'axe implantaire idéal (24) et l'axe de référence orienté dans la même direction que la tige radioopaque (27, 28) sur la coupe sagittale et transversale. L'angle ainsi déterminé sur la coupe sagittale est βᵢ (Figure 8) et l'angle déterminé sur la coupe transversale est γᵢ (Figure 9). La mesure des angles peut être effectuée par un logiciel. Les angles βᵢ et γᵢ correspondent à la correction qui doit être apportée aux degrés d'inclinaison de référence βᵣ et γᵣ choisis à l'étape d).

La Figure 8 est la schématisation d'une coupe scannographique sagittale d'un maxillaire. L'axe de référence orienté dans la même direction que la tige radioopaque (27) logée dans le gabarit radiologique (21) est visible. L'axe implantaire idéal est choisi en fonction la morphologie du maxillaire. On mesure l'angle βi entre l'axe implantaire idéal et l'axe de référence. La Figure 9 est la schématisation d'une coupe scannographique transversale d'un maxillaire. L'axe de référence schématisé (28) est visible. L'axe implantaire idéal est choisi en fonction de la morphologie du maxillaire. Il est schématisé par un segment dont l'origine est la gencive superficielle qui est en continuité avec l'image radiographique de l'intrados du gabarit radiologique. On mesure l'angle γᵢ entre l'axe implantaire idéal et l'axe de référence.
n) pour chacun des points d'introduction implantaire, on effectue les trois mouvements suivants sur le dispositif :
   i) rotation du plateau tournant d'un angle αᵢ;
   ii) inclinaison du modèle en plâtre sur le dispositif d'un angle βᵢ par rotation de l'articulation du dispositif ayant pour axe de rotation l'axe x'Ox ; i allant de 1 à n ;
   iii) inclinaison du modèle en plâtre sur le dispositif d'un angle γᵢ par rotation de l'articulation du dispositif ayant pour axe de rotation l'axe y'Oy ; i allant de 1 à n.
o) pour chacun des points d'introduction implantaire, forage du gabarit radiologique disposé sur le modèle en plâtre à l'aplomb du point d'introduction implantaire à l'aide d'un foret calibré au diamètre du tube guide et mise en place d'un tube guide dans le conduit ainsi foré. Quel que soit le point de l'arcade dentaire considéré et une direction partant de ce point, le dispositif selon l'invention permet de régler la direction du tube guide de manière à ce qu'elle soit identique à la direction implantaire idéale déterminée sur les coupes scannographiques à l'étape 1).

Le conduit créé dans le gabarit radiologique est destiné à recevoir un tube guide. Le diamètre du foret utilisé est adapté au diamètre externe du tube guide de manière à ce qu'une fois inséré dans le conduit de forage, le tube guide y soit définitivement immobilisé. Le gabarit radiologique muni du tube guide constitue un gabarit chirurgical.

Une variante pour la mise en place des tubes guides, qui est applicable aux deux modes de réalisation de la méthode, consiste à forer le modèle en plâtre aux points d'introduction implantaire à l'aide d'un foret calibré au diamètre interne du tube guide, puis introduire des tiges de ce diamètre surmontées des tubes guides dans les conduits ainsi réalisés, évider le gabarit radiologique au niveau des points de forage, puis positionner le gabarit radiologique autour des tubes guides, puis le charger de résine de manière à enserrer le tube guide à l'intérieur du gabarit radiologique et ainsi constituer un gabarit chirurgical.

### 2. 2 Second mode de mise en oeuvre de la méthode:

Les étapes a) à g) décrites ci-dessus sont communes avec le second mode de réalisation. Elles se poursuivent par les étapes suivantes :
h) marquage de n points d'introduction implantaire, symbolisés par I₁, I₂, ..., Iₙ, sur le modèle en plâtre (3) disposé sur le dispositif (1) dans sa position de référence. Il s'agit de choisir l'emplacement des futurs implants. Les emplacements sont matérialisés sur le modèle en plâtre par des points de marquage appelés points de marquage d'introduction implantaire.
i) forage du guide radiologique à l'aplomb de ces points et mise en place de tiges radioopaques dans les conduits ainsi réalisés. Les directions de forage des tiges radioopaques étant identiques à celles des axes de référence ;
j) rotation des coupes axiales de manière à ce que l'axe du maxillaire (axe de la crête) au niveau de chacun des points d'introduction implantaire visualisés par la tige radio opaque soit perpendiculaire à la coupe transversale et détermination des angles αᵢ de rotation;
k) détermination d'axes implantaires idéaux passant par les points de marquage d'introduction implantaire sur les coupes sagittales et transversales partant de l'extrémité inférieure de la tige radioopaque au contact de la couche gingivale;
1) pour chacun des points d'introduction implantaire, mesure de l'angle entre l'axe implantaire idéal (24) et l'axe de référence représenté par la tige radioopaque sur les coupes sagittale et transversale. L'angle ainsi déterminé sur la coupe sagittale est βᵢ (Figure 8) et l'angle déterminé sur la coupe transversale est γᵢ (Figure 9). La mesure des angles peut être effectuée par un logiciel. Les angles βᵢ et γᵢ correspondent à la correction qui doit être apportée aux angles d'inclinaison de référence βᵣ et γᵣ choisis à l'étape d).
m) pour chacun des points d'introduction implantaire sur le modèle en plâtre fixé sur le dispositif,
   i) rotation du plateau tournant d'un angle αᵢ;
   ii) inclinaison du modèle en plâtre sur le dispositif d'un angle βᵢ par rotation de l'articulation du dispositif ayant pour axe de rotation l'axe x'Ox ; i allant de 1 à n ;
   iii) inclinaison du modèle en plâtre sur le dispositif d'un angle γᵢ par rotation de l'articulation du dispositif ayant pour axe de rotation l'axe y'Oy ; i allant de 1 à n.
n) pour chacun des points d'introduction implantaire, forage du gabarit radiologique à l'aplomb du point d'introduction implantaire à l'aide d'un foret calibré au diamètre du tube guide et mise en place du tube guide dans le conduit ainsi foré.

Une variante pour la mise en place des tubes guides, qui est applicable aux deux modes de réalisation de la méthode, consiste à forer le modèle en plâtre aux points d'introduction implantaire à l'aide d'un foret calibré au diamètre interne du tube guide, puis introduire des tiges de ce diamètre surmontées des tubes guides dans les conduits ainsi réalisés, évider le gabarit radiologique au niveau des points de forage, puis positionner le gabarit radiologique autour des tubes guides, puis le charger de résine de manière à enserrer le tube guide à l'intérieur du gabarit radiologique et ainsi constituer un gabarit chirurgical.

## Revendications

1. Procédé de fabrication d'un gabarit radiologique comprenant au moins deux tiges radioopaques et d'un gabarit chirurgical comprenant au moins un tube guide, ledit procédé mettant en oeuvre un dispositif (1) comprenant:
a) un moyen de fixation (2) d'un solide (3), tel qu'un modèle en plâtre d'un maxillaire, sur un plateau tournant (4) permettant la rotation du solide et la mesure de l'angle de rotation du solide ; la position du solide sur le plateau tournant étant identifiable ; le plateau tournant reposant sur un disque gradué (14) et étant apte à effectuer un mouvement de rotation autour de l'axe perpendiculaire au disque gradué et passant en son centre ;
b) un appareil de forage (5) apte à se déplacer selon une direction verticale pour forer le solide fixé sur le plateau tournant;
c) un plateau fixe (12) solidaire d'une colonne verticale (10) définissant une direction verticale et servant de support à l'appareil de forage (5);
d) un moyen (9, 9') pour amener un point de forage du solide à l'aplomb de l'appareil de forage, lequel moyen est constitué d'un premier plateau mobile (9) pouvant se déplacer par rapport au plateau fixe dans une direction et d'un second plateau mobile (9') solidaire du premier plateau mobile, pouvant se déplacer par rapport au premier plateau mobile selon une direction perpendiculaire à la direction de déplacement du premier plateau mobile; le déplacement du solide pouvant être mesuré par rapport à un point de référence ;
e) un moyen pour fixer la direction de forage comprenant deux articulations (6,7) supportées par le second plateau mobile, les axes de rotation des deux articulations étant perpendiculaires entre eux et perpendiculaires à la direction de déplacement de l'appareil de forage ; le plateau tournant et le disque gradué formant un ensemble reposant sur les deux articulations ;
f) un moyen de mesure du déplacement (11) de chacun des deux plateaux mobiles par rapport à une position choisie;
ledit procédé comprenant les étapes suivantes :
a) sur le dispositif (1), repérage d'une position angulaire de référence αᵣ du plateau tournant (4) sur le disque gradué (14) ;
b) fixation d'un modèle en plâtre d'un maxillaire (3) muni d'un gabarit radiologique (21) dans une position reproductible et référencée du plateau tournant ;
c) marquage de deux points sur le modèle en plâtre, ces deux points se trouvant sur une droite parallèle à la direction de déplacement d'un des deux plateaux mobiles (9,9'); l'un des deux points constituant l'origine d'un repère orthonormé ;
d) choix d'un degré d'inclinaison de référence βᵣ et γᵣ des deux articulations (6,7);
e) forage du gabarit radiologique à l'aplomb des deux points de l'étape c) et introduction des tiges radioopaques dans les conduits ainsi forés (22, 23);
f) radiographie en trois dimensions des maxillaires munis du gabarit radiologique, et obtention, à l'aide d'un logiciel, des coupes axiales, sagittales et transversales d'un des maxillaires quelle que soit son orientation tridimensionnelle ;
g) orientation du maxillaire de telle sorte que :
g1) une coupe scannographique axiale passant par les deux tiges radioopaques fasse apparaître deux points formant une droite parallèle à la direction de déplacement d'un des deux plateaux mobiles ;
g2) une coupe scannographique transversale passant par l'une deux tiges radioopaques la fasse apparaître dans sa totalité ;
g3) une coupe sagittale passant par l'une des tiges radioopaques la fasse apparaître dans sa totalité ;
h) marquage de n points d'introduction implantaire sur le modèle en plâtre I₁, I₂, ..., Iₙ ou marquage de n points d'introduction implantaire sur les coupes scannographiques I'₁, I'₂, ..., I'ᵢₙ;
i) détermination des coordonnées des n points d'introduction implantaire dans un repère orthonormé xOy associé soit au dispositif, soit à la coupe scannographique axiale, l'origine du repère étant l'un des points à l'aplomb duquel une tige radioopaque a été forée dans le gabarit radiologique ;
j) détermination pour chacun des n points d'introduction implantaire de l'angle de rotation de la coupe axiale αᵢ, i allant de 1 à n, de manière à ce que l'axe du maxillaire au niveau de chacun des points d'introduction implantaire soit perpendiculaire à l'axe de la coupe transversale passant par ces points ;
k) détermination d'axes implantaires idéaux sur les coupes sagittales et transversales, un axe implantaire idéal étant schématisé par un segment dont l'origine est la gencive superficielle qui est en continuité avec l'image radiographique de l'intrados du gabarit radiologique ;
l) pour chaque point d'introduction implantaire, mesure de l'angle βᵢ entre l'axe implantaire idéal (24) et l'axe de référence (27) représenté par un segment dans la même direction que la tige radioopaque sur la coupe sagittale, mesure de l'angle γᵢ entre l'axe implantaire idéal (24) et l'axe de référence (28) représenté par un segment dans la même direction que la tige radioopaque sur la coupe transversale ; i allant de 1 à n ;
m) sur le dispositif, pour chaque point d'introduction implantaire, rotation du plateau tournant d'un angle αᵢ déterminé à l'étape j), inclinaison d'une des articulations autour de l'axe Ox de l'angle βᵢ et inclinaison de la deuxième articulation autour de l'axe Oy de l'angle γᵢ ;
n) pour chacun des points d'introduction implantaire, forage du gabarit radiologique à l'aplomb du point d'introduction implantaire à l'aide d'un foret calibré au diamètre interne du tube guide et introduction de cylindres de ce diamètre surmontées des tubes guides dans les conduits ainsi réalisés, évidage du gabarit radiologique au niveau des points de forage, positionnement des points de forage autour des tubes guides, et chargement du gabarit radiologique de résine de manière à enserrer le tube guide à l'intérieur du gabarit radiologique.

2. Procédé de fabrication d'un gabarit radiologique comprenant au moins deux tiges radioopaques et d'un gabarit chirurgical comprenant au moins un tube guide, ledit procédé mettant en oeuvre un dispositif (1) comprenant:
a) un moyen de fixation (2) d'un solide (3), tel qu'un modèle en plâtre d'un maxillaire, sur un plateau tournant (4) permettant la rotation du solide et la mesure de l'angle de rotation du solide ; la position du solide sur le plateau tournant étant identifiable ; le plateau tournant reposant sur un disque gradué (14) et étant apte à effectuer un mouvement de rotation autour de l'axe perpendiculaire au disque gradué et passant en son centre ;
b) un appareil de forage (5) apte à se déplacer selon une direction verticale pour forer le solide fixé sur le plateau tournant;
c) un plateau fixe (12) solidaire d'une colonne verticale (10) définissant une direction verticale et servant de support à l'appareil de forage (5);
d) un moyen (9, 9') pour amener un point de forage du solide à l'aplomb de l'appareil de forage, lequel moyen est constitué d'un premier plateau mobile (9) pouvant se déplacer par rapport au plateau fixe dans une direction et d'un second plateau mobile (9') solidaire du premier plateau mobile, pouvant se déplacer par rapport au premier plateau mobile selon une direction perpendiculaire à la direction de déplacement du premier plateau mobile; le déplacement du solide pouvant être mesuré par rapport à un point de référence ;
e) un moyen pour fixer la direction de forage comprenant deux articulations (6,7) supportées par le second plateau mobile, les axes de rotation des deux articulations étant perpendiculaires entre eux et perpendiculaires à la direction de déplacement de l'appareil de forage ; le plateau tournant et le disque gradué formant un ensemble reposant sur les deux articulations ;
f) un moyen de mesure du déplacement (11) de chacun des deux plateaux mobiles par rapport à une position choisie;
ledit procédé comprenant les étapes suivantes:
a) sur le dispositif (1), repérage d'une position angulaire de référence αᵣ du plateau tournant (4) sur le disque gradué (14);
b) fixation d'un modèle en plâtre d'un maxillaire (3) muni d'un gabarit radiologique (21) dans une position reproductible et référencée du plateau tournant ;
c) marquage de deux points sur le modèle en plâtre, ces deux points se trouvant sur une droite parallèle à la direction de déplacement d'un des deux plateaux mobiles ; l'un des deux points constituant l'origine d'un repère orthonormé définissant un axe x'Ox et un axe y'Oy ;
d) choix et marquage des n points d'introduction implantaire ;
e) choix d'un degré d'inclinaison de référence βᵣ et γᵣ des deux articulations (6,7);
f) forage du gabarit radiologique (21) à l'aplomb des deux points de l'étape c) et à l'aplomb de tous les points d'introduction implantaire marqués à l'étape d) et introduction des tiges radioopaques dans les conduits ainsi forés (22,23);
g) radiographie en trois dimensions des maxillaires munis du gabarit radiologique, et obtention, à l'aide d'un logiciel, des coupes axiales, sagittales et transversales d'un des maxillaires quelle que soit son orientation tridimensionnelle ;
h) orientation du maxillaire de telle sorte que :
i) pour chaque point d'introduction implantaire, rotation de la coupe axiale d'un angle αᵢ, i allant de 1 à n, de manière à ce que l'axe du maxillaire au niveau de chacun des points d'introduction implantaire visualisé par une tige radioopaque soit perpendiculaire à la coupe transversale passant par ce point;
j) détermination d'axes implantaires idéaux, ceux-ci étant schématisés par un segment ayant pour origine la partie gingivale de la tige radioopaque qui est à l'aplomb du point d'introduction implantaire;
k) mesure pour chaque point d'introduction implantaire de l'angle βᵢ entre l'axe implantaire idéal (24) et la tige radioopaque (27) sur la coupe sagittale et mesure de l'angle γᵢ entre l'axe implantaire idéal (24) et la tige radioopaque (28) sur la coupe transversale ; i allant de 1 à n ;
l) sur le dispositif, pour chaque point d'introduction implantaire, rotation du plateau tournant (4) de l'angle αᵢ, inclinaison d'une des articulations autour de l'axe x'Ox de l'angle βᵢ et inclinaison de la deuxième articulation autour de l'axe y'Oy de l'angle γᵢ de sorte que la position du modèle en plâtre corresponde à l'orientation des coupes axiales, transversales et sagittales ;
m) pour chacun des points d'introduction implantaire, forage du gabarit radiologique à l'aplomb du point d'introduction implantaire à l'aide d'un foret calibré au diamètre interne du tube guide et introduction de cylindres de ce diamètre surmontées des tubes guides dans les conduits ainsi réalisés, évidage du gabarit radiologique au niveau des points de forage, positionnement des points de forage autour des tubes guides, et chargement du gabarit radiologique de résine de manière à enserrer le tube guide à l'intérieur du gabarit radiologique.

3. Procédé selon l'une des revendications 1 à 2, dans lequel les deux articulations constituent une rotule à doigt dont la rotation est bloquée autour d'un axe orienté selon la direction verticale.

4. Procédé selon la revendication 3, dans lequel l'inclinaison de la rotule à doigts ainsi que les déplacements permettant d'amener un point de forage du solide au contact de l'appareil de forage est/sont commandé(s) par ordinateur.

5. Procédé selon l'une des revendications précédentes, dans lequel l'appareil de forage est un moteur présentant un axe longitudinal dans l'axe duquel est monté un foret.

## Patentansprüche

1. Verfahren zur Herstellung einer Röntgenmaske, die wenigstens zwei Stäben und einen strahlenundurchlässigen Bohrschablone, die mindestens ein Führungsrohr, wobei das Verfahren unter Verwendung einer Vorrichtung (1), umfassend :
a) Befestigungsmittel (2) aus einem Feststoff (3), wie ein Gipsmodell des Kiefers, eine Drehplatte (4) eine Drehung des Festkörpers und der Messung des Drehwinkels Feststoff; die Position der fest mit der Drehplatte identifizierbar ist; Drehplatte ruht auf einer Skalenscheibe (14) und geeignet ist, eine Drehbewegung um die Achse senkrecht zu der Skalenscheibe durchzuführen und die durch den Mittelpunkt ;
b) einen Bohrturm (5), der sich in einer vertikalen Richtung für das Bohren des fest mit dem Drehteller befestigt ist;
c) einer festen Platte (12) fest mit einer vertikalen Säule (10) und Definieren einer vertikalen Richtung zum Abstützen des Bohrers (5);
d) Mittel (9, 9') zum Bewirken einer Bohrspitze an der Basis des Fest der Bohrvorrichtung , die Mittel (9) relativ zu der stationären Platte umfasst eine erste bewegliche Platte in einer Richtung und eine zweite bewegliche Platte (9') integral mit der ersten bewegbaren Platte bewegbar ist relativ zu der ersten beweglichen Platte in einer Richtung senkrecht zu der Richtung der Bewegung der ersten beweglichen Platte, die Bewegung des Feststoffs gemessen werden kann relativ zu einem Referenzpunkt;
e) Mittel zum Befestigen der Bohrrichtung , umfassend zwei Gelenke (6,7) durch die zweite Bewegungsplatte gelagert ist, die Drehachsen der beiden Gelenke zueinander senkrecht und senkrecht zu der Bewegungsrichtung der Bohranlage ; der Drehtisch und das Bilden einer Kombination Skalenscheibe bezogen auf die beiden Scharniere ;
f) Mittel zum Messen der Verschiebung (11) jeder beweglichen Platte relativ zu einer ausgewählten Position;
wobei das Verfahren die folgenden Schritte umfasst :
a) die Vorrichtung (1), Anordnen einer Bezugswinkelposition der rotierenden &agr; r ( 4) an der Skalenscheibe (14) Platte;
b) Anbringen eines Gipsmodells einer Backe (3) mit einem Strahlungsmuster (21) und an eine reproduzierbare Position des Drehtisches bezogen ;
c) Markieren zweier Punkte auf dem Gipsmodell, diese zwei Punkte auf einer Linie parallel zur Bewegungsrichtung der beiden beweglichen Platten (9,9 ') liegen , einer der zwei Punkte des Ursprungs bildet eine Orthonormal ;
d) Auswählen einer Referenz Grad Neigung und ßr &ggr; r zwei Gelenke (6,7) ;
e) Bohrschablone Strahlung senkrecht zu den zwei Punkten der Schritt c) und die Einführung der radiopaken Stangen und in den Leitungen (22, 23) gebohrt ;
f) dreidimensionale Röntgenbackemit dem Strahlungsmesser , und Erhalten , unter Verwendung von Software, die axiale, sagittale und eine Querbackeunabhängig von ihrer dreidimensionalen Richtung;
g) Ausrichtung des Kiefers, dass:
g1) eine durch die zwei röntgenstrahlenundurchlässigen Stangen Abschnitt axialen CT erscheinen zwei Punkten, die eine gerade Linie parallel zu der Richtung der Bewegung eines der beiden beweglichen Platten;
g2) eine Querschnitts CT-Scan durch einen von zwei röntgendichte Stangen nicht in ihrer Gesamtheit erscheinen;
g3) ein Sagittalschnitt durch eine der röntgendichte Stangen nicht in ihrer Gesamtheit erscheinen ;
h) Kennzeichnung n Punkte Implantat Einführung auf dem Gipsmodell I1, I2, ... , In oder Kennzeichnung von n Punkten Implantat Einführung Schnitte scannographic I'1, I'2,...,I'n;
i) Bestimmen der Koordinaten der Punkte n der Implantation in einer orthonormalen xOy entweder mit dem Gerät oder der axialen CT Abschnitt verbunden ist, ist der Ursprung des Koordinaten einer der Punkte auf der Basis eine strahlenundurchlässige Stange war in dem Strahlungsmessergebohrt ;
j) Bestimmen, für jede der n Punkte zur Einführung des Implantats Drehwinkel des axialen Abschnitts &agr; i , i von 1 bis n , so daß die Achse der Klemmbacke an jedem der Punkte der Einführung Implantat ist senkrecht zur Achse des Querschnitts durch diese Punkte ;
k) Bestimmen Implantatachsen Idealen sagittalen und transversalen Abschnitte eine ideale Implantatachse ist schematisch durch ein Segment, die aus dem oberflächlichen Gingiva ist kontinuierlich mit dem radiographischen Bild der Unterseite des Strahlen Schablone repräsentiert ;
l) für jeden Punkt der Implantation , die Messung des Winkels zwischen dem Implantat ßi ideelle Achse (24) und die (27) durch ein Segment in der gleichen Richtung wie die Stange auf der sagittalen strahlenundurchlässigen dargestellt Achse Messen der Winkel &ggr; i zwischen den idealen Implantatachse (24) und der Referenzachse (28) ein Segment in der gleichen Richtung wie der strahlungsundurchlässigen Stange auf dem Querschnitt repräsentiert , i von 1 bis n;
m) auf dem Gerät , für jeden Punkt der Implantation , die Drehung des Dreh &agr; i einen bestimmten Winkel in Schritt j) Platte , einer gemeinsamen Winkel um die Achse Ox und der Neigungswinkel &bgr; i das zweite Gelenk um die Achse Oy Winkel &ggr; i;
n) für jeden Punkt der Implantation , die Bohrschablone an die Strahlungsebenedes Punktes der Implantation unter Verwendung eines kalibrierten Bohrführung dem Innendurchmesser des Zufuhrrohrs und der Durchmesser des Zylinderrohres überragt Führer und in den Leitungen , die StrahlungsmessgerätCoring -Level- Bohrungen , Bohren Positionierungspunkte um die Führungsrohreund Template Laden radiologischen Harz durchgeführt, um die Sandwich- Führungsrohr in der X -ray - Maske.

2. Verfahren zur Herstellung einer Röntgenmaske, die wenigstens zwei Stäben und einen strahlenundurchlässigen Bohrschablone, die mindestens ein Führungsrohr, wobei das Verfahren unter Verwendung einer Vorrichtung (1), umfassend :
a) Befestigungsmittel (2) aus einem Feststoff (3), wie ein Gipsmodell des Kiefers, eine Drehplatte (4) eine Drehung des Festkörpers und der Messung des Drehwinkels Feststoff; die Position der fest mit der Drehplatte identifizierbar ist ; Drehplatte ruht auf einer Skalenscheibe (14) und geeignet ist, eine Drehbewegung um die Achse senkrecht zu der Skalenscheibe durchzuführen und die durch den Mittelpunkt;
b) einen Bohrturm (5), der sich in einer vertikalen Richtung für das Bohren des fest mit dem Drehteller befestigt ist;
c) einer festen Platte (12) fest mit einer vertikalen Säule (10) und Definieren einer vertikalen Richtung zum Abstützen des Bohrers (5);
d) Mittel (9, 9') zum Bewirken einer Bohrspitze an der Basis des Fest der Bohrvorrichtung , die Mittel (9) relativ zu der stationären Platte umfasst eine erste bewegliche Platte in einer Richtung und eine zweite bewegliche Platte (9 ') integral mit der ersten bewegbaren Platte bewegbar ist relativ zu der ersten beweglichen Platte in einer Richtung senkrecht zu der Richtung der Bewegung der ersten beweglichen Platte , die Bewegung des Feststoffs gemessen werden kann relativ zu einem Referenzpunkt;
e) Mittel zum Befestigen der Bohrrichtung , umfassend zwei Gelenke (6,7) durch die zweite Bewegungsplatte gelagert ist, die Drehachsen der beiden Gelenke zueinander senkrecht und senkrecht zu der Bewegungsrichtung der Bohranlage ; der Drehtisch und das Bilden einer Kombination Skalenscheibe bezogen auf die beiden Scharniere ;
f) Mittel zum Messen der Verschiebung (11) jeder beweglichen Platte relativ zu einer ausgewählten Position;
wobei das Verfahren die folgenden Schritte umfasst :
a) die Vorrichtung (1), Anordnen einer Bezugswinkelposition der Dreh ar (4) an der Skalenscheibe (14) Platte;
b) Anbringen eines Gipsmodells einer Backe (3) mit einem Strahlungsmuster (21) und an eine reproduzierbare Position des Drehtisches bezogen ;
c) Markieren zweier Punkte auf dem Gipsmodell , diese zwei Punkte auf einer Linie parallel zu der Richtung der Bewegung eines der beiden beweglichen Platten , einer der zwei Punkte des Ursprungs einer orthonormalen bildet definieren x'Ox eine Achse und eine Achse y'Oy ;
d) Auswahl und Kennzeichnung von n Punkten Implantat Einführung ;
e) die Auswahl eines Referenz Grad Neigung und ßr &ggr; r zwei Gelenke (6,7) ;
f) Bohrung des Strahlungsmusters (21) senkrecht zu den zwei Punkten der Stufe c ) und in Ausrichtung mit allen Implantateinführungspunktein Schritt d) und Anordnen der Stäbe in die Kanäle strahlenundurchlässigen gebohrt gut (22,23) ;
g) dreidimensionale Röntgenbackemit dem Strahlungsmesser , und Erhalten , unter Verwendung von Software , axialer und sagittaler Querschnitte der Klemmbacken unabhängig von ihrer dreidimensionalen Ausrichtung ;
h) Ausrichtung des Kiefers , dass:
i) für jeden Punkt der Implantation , die Drehung des axialen Querschnitt einen Winkel &agr; i , i von 1 bis n , so daß die Achse der Klemmbacke an jedem der Punkte der Einführung Implantat angesehen eine strahlenundurchlässige Stange senkrecht zu dem Querschnitt durch den Punkt;
j) Bestimmen ideale Implantatachsen , wobei diese schematisch durch ein Segment aus dem gingivalen Abschnitt des strahlenundurchlässigen Stange, die direkt über der Stelle der Implantation ist Ursprung dargestellt ;
k) für jeden Messpunkt der Einführung des Implantats zwischen dem Winkel &bgr; i ideale Implantatachse (24) und der strahlenundurchlässigen Stange (27) auf der Sagittalebene und Messen des Winkels &ggr; i zwischen den idealen Implantatachse (24) und der strahlenundurchlässigen Stange (28) auf dem Querschnitt, i von 1 bis n;
l) auf dem Gerät , für jeden Punkt der Implantation wird die Drehung des Drehtisches (4) von dem Winkel &agr; i die Gelenke einer Neigung um die Achse des x'Ox &bgr; i und der Neigungswinkel um die zweite Gelenkachse des &ggr; i y'Oy Winkel, so dass die Position des Gipsmodells entsprechen der Ausrichtung der axialen , sagittalen und quer ;
m) für jeden Punkt der Implantation , die Bohrschablone an die Strahlungsebenedes Punktes der Implantation unter Verwendung eines kalibrierten Bohrführung dem Innendurchmesser des Zufuhrrohrs und der Durchmesser des Zylinderrohres überragt Führer und in den Leitungen , die StrahlungsmessgerätCoring -Level- Bohrungen , Bohren Positionierungspunkte um die Führungsrohreund Template Laden radiologischen Harz durchgeführt , um die Sandwich- Führungsrohr in der X -ray - Maske.

3. Verfahren nach einem der Ansprüche 1 bis 2, wobei die zwei Kugelgelenke mit dem Finger, der eine Drehung um eine Achse in der vertikalen Richtung erstreckt, blockiert ist, zu bilden.

4. Verfahren nach Anspruch 3, wobei die Neigung der Kniescheibe und der Fingerbewegung für die Erhebung einer Bohrspitze des Feststoffs in Kontakt mit der Bohrvorrichtung wird / werden, gesteuert (n) Computer.

5. Verfahren nach einem der vorhergehenden Ansprüche, wobei die Bohrvorrichtung einen Motor mit einer Längsachse in der Achse, von denen sich eine Bohrkrone befestigt ist.

## Claims

1. A method for manufacturing an X-ray mask comprising at least two radiopaque rods and for manufacturing a surgical template comprising at least one tube guide, said method using a device (1) comprising:
a) a means (2) for fixing a solid (3), such as a plaster model of a jaw, on a rotating plate (4) enabling rotation of the solid and the measurement of the rotation angle of the solid ; the position of the solid on the rotating plate being identifiable ; the rotating plate resting on a graduated disc (14) and being adapted to perform a rotation movement around the axis which is perpendicular to the graduated disc and which passes through its center ;
b) a drilling apparatus (5) capable of moving along a vertical direction for drilling the solid fixed on the rotating plate ;
c) a fixed plate (12) fixed to a vertical column (10) defining a vertical direction and supporting the drilling apparatus (5) ;
d) a means (9, 9') for placing a drilling point directly under the drilling apparatus, which means consists of a first movable plate (9) capable of moving relative to the fixed plate in one direction and a second movable plate (9') fixed to the first movable plate and capable of moving relative to the first movable plate along one direction perpendicular to the direction of travel of the first movable plate, the travel of the solid being measurable with respect to a reference point ;
e) a means for fixing the drilling direction, said means comprising two articulations (6,7) supported by the second moving plate, the rotation axes of both articulations being mutually perpendicular and perpendicular to the direction of travel of the drilling apparatus ; the rotating table and the graduated disc forming an assembly resting on the two articulations ;
f) means for measuring the displacement (11) of each movable plate with respect to a selected position ;
said method comprising the steps of:
a) on the device (1), locating a reference angular position αᵣ of the rotating plate (4) on the graduated disc (14) ;
b) fastening a plaster model of a jaw (3) equipped with an X-ray mask (21) on the rotating plate in a referenced and reproducible position ;
c) marking two points on the plaster model, these two points lying on a line parallel to the direction of travel of the two movable plates (9, 9'), one of the two points constituting the origin of an orthonormal coordinate system ;
d) selecting a reference tilt angle βᵣ and γᵣ for the two articulations (6,7) ;
e) drilling the X-ray mask directly above the two points of step c) and introducing the radiopaque rods in the conduits thus drilled (22, 23) ;
f) obtaining a three-dimensional X-Ray view of a jaw bearing the X-ray mask, and obtaining through a software, the axial, sagittal and transverse cuts of the jaw regardless of its three-dimensional orientation ;
g) orientation of the jaw such that :
g1) an axial cut passing through the two radiopaque rods shows two points forming a line parallel to the direction of travel of one of the two movable plates;
g2) a transverse cut passing through one of two radiopaque rods shows the rod in its entirety ;
g3) a sagittal cut passing through one of the radiopaque rods shows the rod in its entirety ;
h) marking n points for introducing implants on the plaster model I₁, I₂, ..., Iₙ or marking n points I'₁, I'₂, ..., I'ₙ for introducing implants on the cuts ;
i) determining the coordinates of the n points of implants introduction on an orthonormal coordinate system xOy associated either with the device or with the axial cut, the origin of the coordinate system being one of the points at the base of which a radiopaque rod was drilled in the X-ray mask;
j) determining for each of the n points of implant introduction the rotation angle of the axial cut αᵢ , i ranging from 1 to n, so that the axis of the jaw at each of the points of implant introduction is perpendicular to the axis of the transversal cut passing through these points ;
k) determining the ideal implant axes on the sagittal and transverse cuts, an ideal implant axis being schematically represented by a segment the origin of which origin is the superficial gingiva which is continuous with the radiographic image of the underside of the X-ray mask ;
l) for each point of implant introduction, measuring the angle βᵢ between the ideal implant axis (24) and the reference axis (27) represented by a segment in the same direction as the rod on the sagittal cut, measuring the angle γᵢ between the ideal implant axis (24) and the reference axis (28) schematically represented by a segment in the same direction as the radiopaque rod on the transversal cut ; i ranging from 1 to n ;
m) on the device, for each point of implant introduction, rotation of the rotating plate by an angle αᵢ determined in step j) plate, tilting one of the aticulations around the Ox axis by an angle βᵢ and tilting the second articulation around the Oy axis by an angle γᵢ;
n) for each point of implant introduction, drilling the X-ray mask directly above the point of implant introduction using a drill calibrated to the internal diameter of the tube guide and introduction of cylindres having said diameter surmounted by tube guides in the conduits thus obtained, coring the X-Ray mask at the drilling points, positioning the drilling points around the tube guides, and loading the X-Ray mask with resin such as to tightly hold the tube guide inside the X-ray mask.

2. A method for manufacturing an X-ray mask comprising at least two radiopaque rods and for manufacturing a surgical template comprising at least one tube guide, said method using a device (1) comprising:
a) a means (2) for fixing a solid (3), such as a plaster model of a jaw, on a rotating plate (4) enabling the rotation of the solid and the measurement of the rotation angle of the solid ; the position of the solid on the rotating plate being identifiable ; the rotating plate resting on a graduated disc (14) and being adapted to perform a rotating movement around the axis being perpendicular to the graduated disc and passing through its center ;
b) a drilling apparatus (5) capable of moving along a vertical direction for drilling the solid fixed on the rotating plate ;
c) a fixed plate (12) fixed to a vertical column (10) defining a vertical direction and supporting the drilling apparatus (5) ;
d) a means (9, 9') for placing a drilling point of the solid directly under the drilling apparatus, which means consists of a first movable plate (9) capable of moving relative to the fixed plate along one direction and a second movable plate (9') fixed to the first movable plate and capable of moving relative to the first movable plate along a direction perpendicular to the direction of travel of the first movable plate, the travel of the solid being measurable with respect to a reference point ;
e) a means for fixing the drilling direction, said means comprising two articulations (6,7) supported by the second moving plate, the rotation axes of both articulations being mutually perpendicular and perpendicular to the direction of travel of the drilling apparatus ; the rotating table and the graduated disc forming an assembly resting on the two joints ;
f) means for measuring the displacement (11) of each of the two movable plates with respect to a selected position ;
said method comprising the steps of:
a) on the device (1), locating a reference angular position αᵣ of the rotating plate (4) on the graduated disc (14) ;
b) fastening a plaster model of a jaw (3) equipped with an X-ray mask (21) on the rotating plate in a referenced and reproducible position ;
c) marking two points on the plaster model, these two points lying on a line parallel to the direction of travel of one of the two movable plates, one of the two points constituting the origin of an orthonormal coordinate system defining one x'Ox axis and one y'Oy axis;
d) selecting and marking n points of implant introduction ;
e) selecting a tilt angle of reference βᵣ and γᵣ of the two articulations (6,7) ;
f) drilling the X-ray mask (21) directly above the two points of step c) and directly above all the points for implant introduction marked in step d) and introducing the radiopaque rods in the conduits thus drilled (22, 23) ;
g) obtaining a three-dimensional X-Ray image of a jaw equipped with the X-ray mask, and obtaining, through a software, the axial, sagittal and transverse cuts of the jaw regardless of its three-dimensional orientation ;
h) orientation of the jaw such that :
i) for each point of implant introduction, the axial cut is rotated by an angle αᵢ, i ranging from 1 to n, such that the jaw axis for each point of implant introduction which is shown by a radioopaque rod is perpendicular to the transverse cut passing through said point;
j) determining ideal implant axes, those being represented by a segment the origin of which being the gingival part of the radioopaque rod which is directly under the point of implant introduction ;
k) for each point of implant introduction, measuring the angle βi between the ideal implant axis (24) and the radioopaque rod (27) on the sagittal cut and measuring the angle γi between the ideal implant axis (24) and the radioopaque rod (28) on the transverse cut ; i ranging from 1 to n ;
l) on the device, for each point of implant introduction, rotation of the rotating plate (4) by an angle αᵢ, tilting one of the articulations around the x'Ox axis by an angle βᵢ and tilting the second articulation around the y'Oy axis by an angle γᵢ ; such that the position of the plaster model of the jaw corresponds to the orientation of the axial, transverse and sagittal cuts ;
m) for each point of implant introduction, drilling the X-ray mask directly above the point of implant introduction using a drill calibrated to the internal diameter of the tube guide and introducing cylindres having said diameter surmounted by tube guides in the conduits thus obtained, coring the X-Ray mask at the drilling points, positioning the drilling points around the tube guides, and loading the X-Ray mask with resin such as to tightly hold the tube guide inside the X-ray mask.

3. The method according to one of claims 1 to 2, wherein the two articulations form a ball joint which rotation is blocked around an axis extending in the vertical direction.

4. The method of claim 3, wherein the tilt of the ball joint and the movement for bringing a drilling point of the solid in contact with the drilling apparatus is/are controlled by a computer.

5. Method according to one of the preceding claims, wherein the drilling apparatus is a motor having a longitudinal axis in the axis of which a drill bit is mounted.
